# FASCICULE DE BREVET EUROPEEN

(11) **EP 2 101 239 B1**
(45) Date de publication et mention de la délivrance du brevet: **02.05.2012**
(21) Numéro de dépôt: 09305205.8
(22) Date de dépôt: 05.03.2009
(51) Int. Cl.: G05D 11/13

(54) **Procédé de commande d'un système de dosage et de mélange d'un produit à plusieurs composants, ainsi que ce système de dosage et de mélange**
Verfahren zur Steuerung einer Dosier- und Mischeinrichtung für ein Mehrkomponentenprodukt und entsprechendes System
Method to control a system for dosing and mixing a multi-component product and corresponding system

(30) Priorité: 10.03.2008 FR 0801305
(43) Date de publication de la demande: 16.09.2009
(73) Titulaire: EXEL INDUSTRIES, 51206 Epernay Cedex (FR)
(72) Inventeur: Ballu, Patrick, 51100 Reims (FR)
(74) Mandataire: Laget, Jean-Loup

(56) Documents cités:
- EP-A- 0 566 976
- DE-A1- 2 901 438
- US-A- 4 976 546
- US-A- 5 071 320

## Description

La présente invention concerne un procédé de commande d'un système de dosage et de mélange d'un produit composé d'un premier composant et d'un deuxième composant devant être mélangés dans un mélangeur à un rapport de dosage prédéterminé. L'invention concerne également un tel système de dosage et de mélange dans lequel le procédé de commande peut être mis en oeuvre.

D1 montre un procédé de commande d'un système de dosage avec une pompe.

Le rôle de ce système est de délivrer en continu un mélange de deux composants dans un rapport défini par un opérateur. Ce mélange est ensuite utilisé directement dans les applications, par exemple pour la pulvérisation d'une peinture à l'aide d'un pistolet qui est connecté à ce système de dosage et de mélange.

Le système comprend une première pompe verticale alternative à double effet apte à injecter le premier composant dans le mélangeur, et une deuxième pompe verticale alternative à double effet apte à injecter le deuxième composant dans le mélangeur de façon séquentielle par rapport à la première pompe. Le déplacement du piston de chaque pompe peut être inversé d'un sens d'expulsion du composant à un sens d'aspiration et d'expulsion du composant et vice versa. Le circuit de chaque pompe comprend, outre un clapet d'aspiration et un clapet de refoulement, une vanne d'injection insérée entre le clapet de refoulement de chaque pompe et le mélangeur.

Un procédé de commande connu comprend les phases suivantes consistant à :
- ouvrir la vanne d'injection de la première pompe et effectuer une injection d'une dose prédéfinie dans le mélangeur en fonction dudit rapport de dosage prédéterminé;
- fermer la vanne d'injection de la première pompe ;
- ouvrir la vanne d'injection de la deuxième pompe et effectuer une injection d'une dose prédéfinie dans le mélangeur en fonction dudit rapport de dosage prédéterminé;
- fermer la vanne d'injection de la deuxième pompe de manière à terminer les phases d'un premier cycle d'injection ;
- déclencher l'inversion du piston de chaque pompe dans son sens de d'aspiration et d'expulsion lorsqu'il est nécessaire de remplir de nouveau cette pompe du composant correspondant ; et
- ouvrir de nouveau la vanne d'injection de la première pompe pour commencer le cycle suivant en répétant ces phases.

Dans ce système connu à injection séquentielle, l'inversion du déplacement du piston de la pompe du sens d'expulsion vers le sens d'aspiration et d'expulsion de la pompe est déclenché par une butée de fin de course du piston de la pompe.

Le but de l'invention est de rendre le fonctionnement du système plus souple et efficace en supprimant, au moins pour une grande partie, le temps mort lors d'une de l'inversion d'une pompe et l'attente pendant ce temps de l'autre avant de pouvoir continuer l'injection séquentielle, sans pour autant créer une pression différentielle pouvant entraîner un déséquilibre entre les deux circuits de pompe pour ne pas avoir des fluctuations de débit à la sortie de distribution du système.

Un premier objet de l'invention est un procédé de commande qui est caractérisé par le fait qu'il comprend en outre les phases suivantes consistant à :
- déterminer à chaque fermeture d'une vanne d'injection le volume restant dans la pompe correspondante,
- et si le volume restant est insuffisant pour l'injection de la dose suivante, inverser le déplacement du piston de la pompe dans le sens d'aspiration et d'expulsion du composant correspondant en même temps que la vanne d'injection de l'autre pompe est ouverte pour l'injection de la dose de l'autre composant dans le mélangeur.

Selon d'autres caractéristiques du procédé selon l'invention :
- le volume restant dans chaque pompe est déterminé en continu en détectant le déplacement du piston de la pompe ;
- la même pression est maintenue dans les pompes ;
- lors de l'injection de la dose à partir de la première pompe, on détecte une fuite éventuelle dans le circuit de la deuxième pompe en observant un déplacement du piston de celle-ci alors que sa vanne d'injection est fermée, et inversement ;
- l'on détecte une fuite dans un clapet de refoulement ou dans la vanne d'injection associée en déterminant un déplacement du piston de la pompe correspondante dans le sens d'aspiration et d'expulsion, alors que sa vanne d'injection est fermée ;
- l'on détecte une fuite dans un clapet d'aspiration ou dans la vanne d'injection associée en déterminant un déplacement du piston de la pompe correspondante dans le sens d'expulsion, alors que sa vanne d'injection est fermée.

Un deuxième objet de l'invention est un système de dosage et de mélange commandé selon le procédé défini ci-dessus pour le dosage et le mélange d'un produit composé d'un premier composant et d'un deuxième composant devant être mélangés dans un mélangeur à un rapport de dosage prédéterminé, le système comprenant une première pompe alternative apte à injecter une dose dudit premier composant dans le mélangeur, et une deuxième pompe alternative apte à injecter une dose dudit deuxième composant dans ledit mélangeur de façon séquentielle par rapport à la première pompe, le déplacement du piston de chaque pompe pouvant être inversé d'un sens d'expulsion du composant à un sens d'aspiration et d'expulsion du composant, et inversement. Une vanne d'injection est insérée entre chaque pompe et le mélangeur, caractérisé par le fait qu'il comprend en outre un contrôleur programmé pour déclencher le déplacement du piston d'une pompe dans le sens d'aspiration et d'expulsion du volume de cette pompe après avoir déterminé, suite à la fermeture de la vanne d'injection, que le volume restant dans la pompe est insuffisant pour injecter la dose suivante du composant correspondant dans le mélangeur.

Selon d'autres caractéristiques du système selon l'invention :
- ledit contrôleur est relié à un détecteur de déplacement associé à chaque pompe pour détecter en continu le déplacement du piston de la pompe ;
- ledit détecteur de déplacement est un détecteur linéaire ;
- le premier composant est une base et le deuxième composant est un catalyseur.

D'autres caractéristiques et avantages de l'invention ressortiront de la description qui va suivre d'un mode de réalisation non limitatif de l'invention, en référence aux figures annexées dans lesquelles :

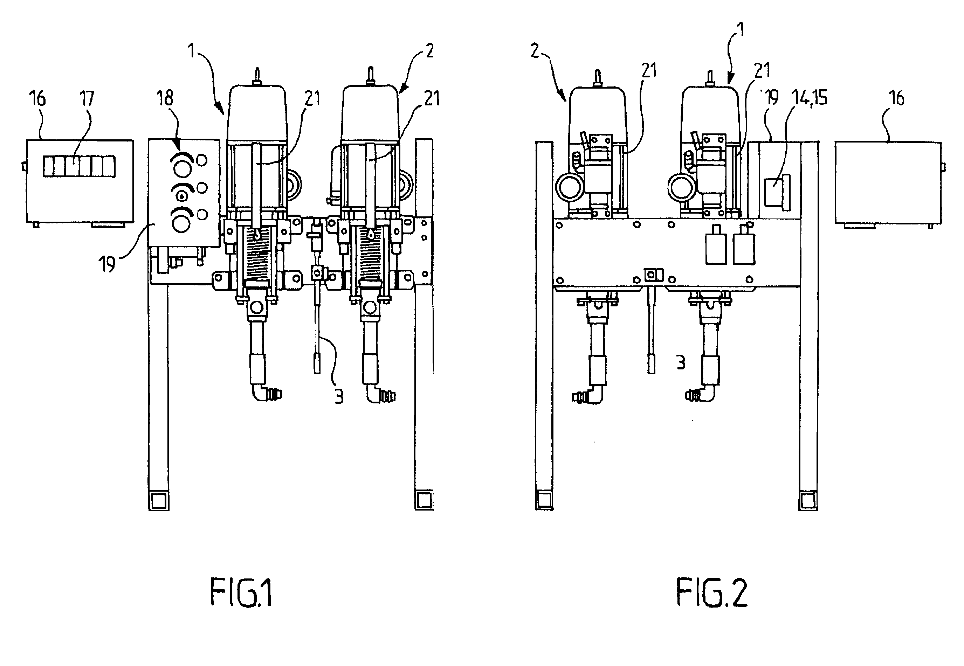

- la figure 1 est une vue de face d'un système de dosage et de mélange selon l'invention ;
- la figure 2 est une vue de derrière du système de dosage et de mélange de la figure 1 ;
- la figure 3 est une vue partielle à plus grande échelle du système de dosage et de mélange selon l'invention ;
- la figure 4 est une vue schématique illustrant le fonctionnement du système de dosage et de mélange selon l'invention ; et
- la figure 5 montre un exemple de dosage de deux composants d'un système de dosage et de mélange selon l'invention.

Un mode de réalisation de l'invention sera maintenant décrit en référence aux figures dans lesquels les éléments identiques ou équivalents porteront les mêmes signes de référence.

Le système de dosage et de mélange illustré sur les figures est destiné au dosage et au mélange d'un produit tel qu'une peinture, à l'aide d'un pistolet de pulvérisation (non représenté), ce produit étant composé d'un premier composant 4, tel qu'une base, et d'un deuxième composant 5, tel qu'un catalyseur. Le système comprend une première pompe alternative à double effet 1 contenant le premier composant, et une deuxième pompe alternative à double effet 2 contenant le deuxième composant. Dans l'exemple illustré, les pompes 1 et 2 sont des pompes pneumatiques.

Ces première et deuxième pompes sont aptes à injecter leur composant respectif dans un mélangeur 3 à la sortie duquel le produit mélangé des deux composants 4, 5 est distribué, par exemple par un pistolet de pulvérisation (non représenté).

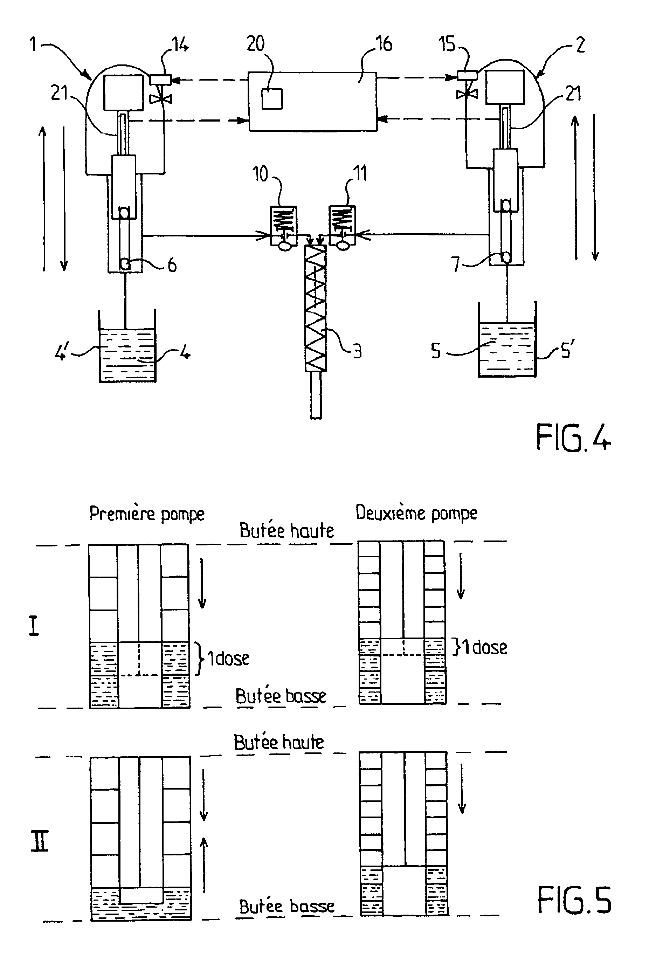

Chaque pompe 1, 2 est reliée à un réservoir de composant respectif 4', 5' (voir figure 4) par l'intermédiaire d'un clapet d'aspiration respectif 6, 7. Le piston (non représenté) de chaque pompe peut être déplacé dans un sens de remplissage en aspirant le composant (d'en bas vers le haut sur les figures) pour remplir le volume de la pompe lorsque le clapet d'aspiration correspondant 6, 7 est ouvert en mettant le volume de la pompe en communication avec le réservoir respectif 4', 5'.

Ensuite, le piston de la pompe peut être déplacé dans l'autre sens qui est un sens expulsion du composant vers le mélangeur 3 par l'intermédiaire d'un clapet de refoulement respectif 8, 9. Chaque pompe est reliée au mélangeur 3 par une vanne d'injection respective 10, 11 qui peut être basculée entre une position entièrement fermée et une position entièrement ouverte pour l'injection. Le mouvement alternatif des pistons de pompe est indiqué par des flèches dans la figure 4.

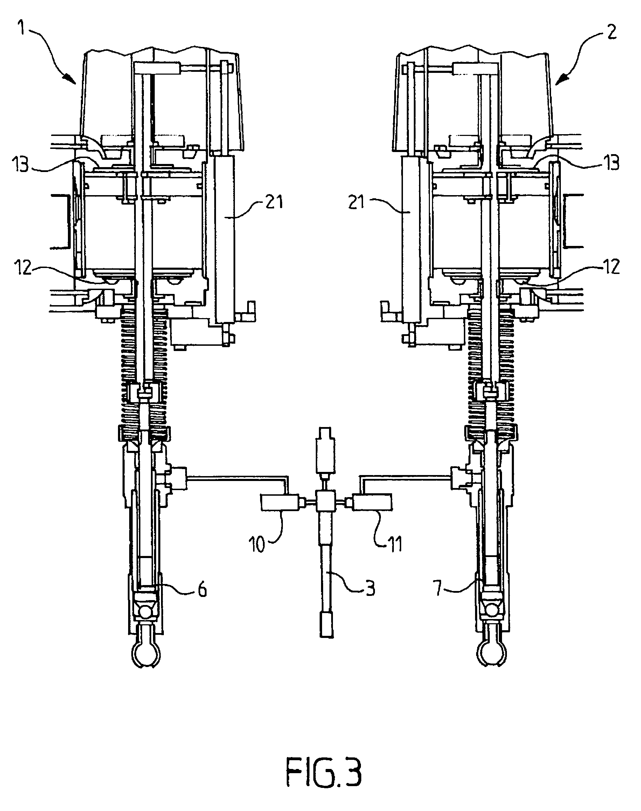

Chaque pompe est de manière électronique pourvue d'une butée basse 12 et d'une butée haute 13 (voir figure 3) définissant les positions extrêmes du piston dans les deux sens.

Ces butées basse et haute 12, 13 sont définies par étalonnage, ce sont des butées électroniques de position lues par des capteurs.

L'inversion du piston de chaque pompe 1, 2 est déclenchée dans un sens ou dans l'autre par une électrovanne respective 14, 15 (voir figure 4).

Les vannes d'injection 8, 9 et les électrovannes d'inversion 14, 15 sont tous reliés à une boîte électronique de commande 16 qui commande l'ouverture et la fermeture des vannes d'injection 10, 11 et des électrovannes d'inversion 14, 15.

La boîte de commande 16 comporte un écran d'affichage 17 des valeurs entrées à l'aide d'un jeu de boutons 18 de réglage et de marche/arrêt prévus sur un panneau de réglage 19 associé à la boîte de commande 16.

Avant de commencer l'utilisation du système, on effectue les réglages suivants à l'aide du panneau de réglage 19 :
- réglage de la pression en agissant sur deux régulateurs d'air (non représentés), un pour chaque pompe ; cette pression est maintenue égale dans les deux pompes 1, 2 ;
- réglage du rapport de dosage des premier et deuxième composants 4, 5 ;
- réglage de la dose individuelle devant être expulsée de chaque pompe à chaque ouverture de la vanne d'injection correspondante 10, 11. Ce réglage est effectué à l'aide d'un potentiomètre (non représenté).

A titre d'exemple, la pression peut être réglée dans une plage de 10 à 200 bars, le rapport de dosage dans une plage de 1/1 à 20/1, et la dose de chaque pompe dans une plage de 0,5 cc à 200 cc, le rapport de dosage étant automatiquement maintenu à la valeur précédemment fixée.

Par ailleurs, la précision du dosage est par exemple de l'ordre de +/- 3%.

Selon l'invention, la boîte électronique 16 comporte un contrôleur 20 programmé pour déclencher le déplacement du piston d'une pompe 1, 2 dans le sens d'aspiration et d'expulsion du volume de cette pompe après avoir déterminé, suite à la fermeture de la vanne d'injection 10 respectivement 11, que le volume restant dans la pompe 1, 2 est insuffisant pour injecter la dose suivante dans le mélangeur 3.

Afin de déterminer à chaque instant le volume restant dans chaque pompe 1, 2, le contrôleur 20 est relié à un détecteur de déplacement 21 associé à chaque pompe pour détecter en continu le déplacement du piston de la pompe. Ainsi, le contrôleur est capable de calculer exactement le volume de composant expulsé en fonction du déplacement du piston de chaque pompe et par là aussi le volume restant du composant dans la pompe.

Selon une autre caractéristique de l'invention, le détecteur de déplacement 21 est un détecteur linéaire.

Ainsi, le contrôleur reçoit un signal de sortie du détecteur 21 et calcule à chaque instant le volume restant dans la pompe 1, 2 pour déterminer si le volume restant est suffisant ou non pour la prochaine injection d'une dose. Si le volume restant ne suffit pas à la dose suivante, le contrôleur 20 déclenche l'inversion du piston de la pompe en commandant les électrovannes 14, 15, et cela avant d'atteindre la butée basse 12 ou haute 13.

L'inversion est ainsi effectuée pendant l'injection de l'autre composant de l'autre pompe de manière à éviter une chute de pression et de débit lors de l'utilisation en continu du système lorsque une des pompes est inversée.

La figure 5 illustre deux situations différentes I et II. On voit que le rapport de dosage entre le composant de la première pompe et celui de la deuxième pompe est pratiquement 1:2.

Les pompes fonctionnent de manière séquentielle, ce qui veut dire que pendant l'injection du composant de la première pompe dans le mélangeur, le contrôleur fait attendre la deuxième pompe jusqu'à la fermeture de la vanne d'injection de la première pompe avant de commander l'injection de la dose à partir de la deuxième pompe en ouvrant la vanne d'injection de celle-ci.

Le détecteur de déplacement du piston de chaque pompe détecte en continu le déplacement et son signal de sortie est alimenté vers le contrôleur qui peut ainsi calculer exactement le volume restant dans la pompe immédiatement après la fermeture de la vanne d'injection de la pompe.

Dans la situation I, il reste suffisamment de composant dans les deux pompes pour effectuer l'injection suivante.

Dans la situation II, le volume restant dans la première pompe ne suffit pas pour injecteur la dose suivante, et le contrôleur commande l'inversion du piston de la première pompe en même temps que la vanne d'injection de la deuxième pompe est ouverte pour l'injection de la dose suivante.

Autrement dit, cette inversion du piston pour le remplissage de la pompe est commandée avant que le piston atteigne la butée basse, alors que la butée haute est actionnée lorsque le piston de la pompe est arrivé dans une position dans laquelle le volume de la pompe est rempli du composant.

Ainsi, l'inversion de la première pompe est effectué en même temps que la deuxième pompe effectue l'injection d'une dose de son composant, et inversement. Par conséquent, l'inversion de la première pompe a lieu en temps masqué. Le système de dosage et de mélange fonctionne d'une manière plus efficace du fait que le temps d'injection du composant à partir d'une pompe est utilisé pour le remplissage de l'autre pompe quand besoin en est.

Un autre avantage de l'invention réside dans le fait que lors de l'injection de la dose à partir de la première pompe, on peut détecter une fuite éventuelle dans le circuit de la deuxième pompe en observant un déplacement du piston de celle-ci alors que sa vanne d'injection est fermée, et inversement.

On peut ainsi détecter une fuite dans un clapet de refoulement ou dans la vanne d'injection en déterminant un déplacement du piston de la pompe dans le sens de remplissage, alors que sa vanne d'injection est fermée.

De la même manière, on détecte une fuite dans un clapet d'aspiration ou dans la vanne d'injection en déterminant un déplacement du piston de la pompe dans le sens d'expulsion, alors que sa vanne d'injection est fermée.

Le contrôleur peut également bloquer une pompe qui présente un dysfonctionnement, par exemple si la pompe s'emballe, c'est-à-dire si son piston se déplace trop vite par rapport à une vitesse maximale définie.

Le procédé et le système sont particulièrement bien adaptés pour mélanger un premier composant constitué par une base avec un deuxième composant constitué par un catalyseur.

## Revendications

1. Procédé de commande d'un système de dosage et de mélange d'un produit composé d'un premier composant (4) et d'un deuxième composant (5) devant être mélangés dans un mélangeur (3) à un rapport de dosage prédéterminé, le système comprenant une première pompe alternative (1) apte à injecter ledit premier composant (4) dans le mélangeur (3), et une deuxième pompe alternative (2) apte à injecter ledit deuxième composant (5) dans ledit mélangeur (3) de façon séquentielle par rapport à la première pompe (1), le déplacement du piston de chaque pompe (1, 2) pouvant être inversé d'un sens d'aspiration et d'expulsion du composant correspondant (4, 5) à un sens d'expulsion du composant et inversement, une vanne d'injection (10, 11) étant insérée entre chaque pompe (1, 2) et le mélangeur (3), le procédé comprenant les phases consistant à :
- ouvrir la vanne d'injection (10) de la première pompe (1) et effectuer une injection d'une dose prédéfinie dans le mélangeur (3) en fonction dudit rapport de dosage prédéterminé;
- fermer la vanne d'injection (10) de la première pompe (1) ;
- ouvrir la vanne d'injection (11) de la deuxième pompe (2) et effectuer une injection d'une dose prédéfinie dans le mélangeur (3) en fonction dudit rapport de dosage prédéterminé;
- fermer la vanne d'injection (11) de la deuxième pompe (2) de manière à terminer les phases d'un premier cycle d'injection ;
- déclencher l'inversion du piston de chaque pompe (1, 2) dans son sens d'aspiration et d'expulsion lorsqu'il est nécessaire de remplir de nouveau cette pompe du composant correspondant ; et
- ouvrir de nouveau la vanne d'injection (10) de la première pompe (1) pour commencer le cycle suivant en répétant ces phases,
**caractérisé par le fait que** le procédé comprend en outre les phases suivantes consistant à :
- déterminer à chaque fermeture d'une vanne d'injection (10, 11) le volume restant dans la pompe correspondante (1, 2), et
- si le volume restant est insuffisant pour l'injection de la dose suivante, inverser le déplacement du piston de la pompe (1, 2) dans le sens d'aspiration et d'expulsion du composant correspondant (4, 5) en même temps que la vanne d'injection (10, 11) de l'autre pompe est ouverte pour l'injection de la dose de l'autre composant dans le mélangeur (3).

2. Procédé de commande selon la revendication 1, **caractérisé par le fait que** le volume restant dans chaque pompe (1, 2) est déterminé en continu en détectant le déplacement du piston de la pompe.

3. Procédé de commande selon la revendication 1, **caractérisé par le fait que** la même pression est maintenue dans les pompes (1, 2).

4. Procédé de commande selon l'une quelconque des revendications précédentes, **caractérisé par le fait que** lors de l'injection de la dose à partir de la première pompe (1), on détecte une fuite éventuelle dans le circuit de la deuxième pompe (2) en observant un déplacement du piston de celle-ci alors que sa vanne d'injection (11) est fermée, et inversement.

5. Procédé de commande selon la revendication 4, **caractérisé par le fait que** l'on détecte une fuite dans un clapet de refoulement (8, 9) ou dans la vanne d'injection associée (10, 11) en déterminant un déplacement du piston de la pompe correspondante (1, 2) dans le sens d'aspiration et d'expulsion, alors que sa vanne d'injection est fermée.

6. Procédé de commande selon la revendication 4, **caractérisé par le fait que** l'on détecte une fuite dans un clapet d'aspiration (6, 7) ou dans la vanne d'injection associée (10, 11) en déterminant un déplacement du piston de la pompe correspondante (1, 2) dans le sens d'expulsion, alors que sa vanne d'injection est fermée.

7. Système de dosage et de mélange commandé selon l'une des revendications précédentes pour le dosage et le mélange d'un produit composé d'un premier composant (4) et d'un deuxième composant (5) devant être mélangés dans un mélangeur (3) à un rapport de dosage prédéterminé, le système comprenant une première pompe alternative (1) apte à injecter une dose dudit premier composant (4) dans le mélangeur (3), et une deuxième pompe alternative (2) apte à injecter une dose dudit deuxième composant (5) dans ledit mélangeur (3) de façon séquentielle par rapport à la première pompe, le déplacement du piston de chaque pompe (1, 2) pouvant être inversé d'un sens d'aspiration et d'expulsion du volume de la pompe vers un sens d'expulsion du composant correspondant (4, 5) et inversement, une vanne d'injection (10, 11) étant insérée entre chaque pompe (1, 2) et le mélangeur (3), **caractérisé par le fait qu'**il comprend en outre un contrôleur (20) programmé pour déclencher le déplacement du piston d'une pompe (1, 2) dans le sens de d'aspiration et d'expulsion du volume de cette pompe après avoir déterminé, suite à la fermeture de la vanne d'injection (10, 11), que le volume restant dans la pompe (1, 2) est insuffisant pour injecter la dose suivante du composant correspondant (4, 5) dans le mélangeur (3).

8. Système de dosage et de mélange selon la revendication 7, **caractérisé par le fait que** ledit contrôleur (20) est relié à un détecteur de déplacement (21) associé à chaque pompe (1, 2) pour détecter en continu le déplacement du piston de la pompe.

9. Système de dosage et de mélange selon la revendication 8, **caractérisé par le fait que** ledit détecteur de déplacement (21) est un détecteur linéaire.

10. Système de dosage et de mélange selon l'une quelconque des revendications 7 à 9, **caractérisé par le fait que** le premier composant (4) est une base et le deuxième composant (5) est un catalyseur.

## Claims

1. A method for controlling a system for dosing and mixing a product consisting of a first component (4) and a second component (5) to be mixed in a mixer (3) in a predetermined dosing ratio, the system comprising a first reciprocating pump (1) adapted for injecting said first component (4) into the mixer (3), and a second reciprocating pump (2) adapted for injecting said second component (5) into said mixer (3) in sequence with respect to the first pump (1), wherein the displacement of the piston of each pump (1, 2) can be inverted from a direction of suction and ejection of the corresponding component (4, 5) to a direction for ejecting the component, and vice versa, an injection valve (10, 11) being inserted between each pump (1, 2) and the mixer (3), the method comprising the stages of:
- opening the injection valve (10) of the first pump (1) and making an injection of a predefined dose into the mixer (3) depending on said predetermined dosing ratio;
- closing the injection valve (10) of the first pump (1);
- opening the injection valve (11) of the second pump (2) and making an injection of a predefined dose into the mixer (3) depending on said predetermined dosing ratio;
- closing the injection valve (11) of the second pump (2) so as to finish the stages of a first injection cycle;
- triggering the inversion of the piston of each pump (1, 2) in the suction and ejection direction thereof when it is necessary to refill the pump with the corresponding component; and
- reopening the injection valve (10) of the first pump (1) so as to start the next cycle by repeating these stages,
**characterized in that** the method further comprises the following stages of:
- determining at each closing of an injection valve (10, 11) the volume remaining inside the corresponding pump (1, 2), and
- if the remaining volume is not sufficient for injecting the next dose, inverting the displacement of the piston of the pump (1, 2) in the suction and ejection direction of the corresponding component (4, 5) while the injection valve (10, 11) of the other pump is open for the injection of the dose of the other component into the mixer (3).

2. The control method according to claim 1, **characterized in that** the volume remaining inside each pump (1, 2) is continuously determined by detecting the displacement of the piston of the pump.

3. The control method according to claim 1, **characterized in that** the same pressure is maintained inside the pumps (1, 2).

4. The control method according to any of the preceding claims, **characterized in that** during injection of the dose from the first pump (1), possible leakage in the circuit of the second pump (2) is detected by observing a displacement of the piston thereof while the injection valve (11) thereof is closed, and vice versa.

5. The control method according to claim 4, **characterized in that** leakage in an outlet valve (8, 9) or in the associated injection valve (10, 11) is detected by determining a displacement of the piston of the corresponding pump (1, 2) in the direction of suction and ejection, while the injection valve thereof is closed.

6. The control method according to claim 4, **characterized in that** leakage in a suction valve (6, 7) or in the associated injection valve (10, 11) is detected by determining a displacement of the piston of the corresponding pump (1, 2) in the direction of ejection while the injection valve thereof is closed.

7. A dosing and mixing system, controlled according to any of the preceding claims, for dosing and mixing a product consisting of a first component (4) and a second component (5) to be mixed in a mixer (3) in a predetermined dosing ratio, the system comprising a first reciprocating pump (1) adapted for injecting a dose of said first component (4) into the mixer (3), and a second reciprocating pump (2) adapted for injecting a dose of said second component (5) into said mixer (3) in sequence with respect to the first pump (1), wherein the displacement of the piston of each pump (1, 2) can be inverted from a direction of suction and ejection of the volume of the pump to a direction for ejecting the corresponding component (4, 5), and vice versa, an injection valve (10, 11) being inserted between each pump (1, 2) and the mixer (3), **characterized by** further comprising a controller (20) programmed for triggering the displacement of the piston of a pump (1, 2) in the direction of suction and ejection of the volume of this pump after having determined upon closing of the injection valve (10, 11) that the volume remaining inside the pump (1, 2) is insufficient for injecting the next dose of the corresponding component (4, 5) into the mixer (3).

8. The dosing and mixing system according to claim 7, **characterized in that** said controller (20) is connected to a displacement detector (21) associated with each pump (1, 2) for continuously detecting the displacement of the piston of the pump.

9. The dosing and mixing system according to claim 8, **characterized in that** said displacement detector (21) is a linear detector.

10. The dosing and mixing system according to any of claims 7 to 9, **characterized in that** the first component (4) is a base and the second component (5) is a catalyst.

## Patentansprüche

1. Verfahren zum Steuern eines Systems zum Dosieren und Mischen eines Produkts, das aus einem ersten Bestandteil (4) und einem zweiten Bestandteil (5) besteht, die in einem Mischer (3) in einem vorherbestimmten Dosierverhältnis zu mischen sind, wobei das System eine erste Kolbenpumpe (1), die zum Einspritzen des ersten Bestandteils (4) in den Mischer (3) geeignet ist, und eine zweite Kolbenpumpe (2), die zum Einspritzen des zweiten Bestandteils (5) in den Mischer (3), und zwar sequenziell im Verhältnis zur ersten Pumpe (1), geeignet ist, umfasst, wobei die Bewegung des Kolbens jeder Pumpe (1, 2) von einer Richtung zum Ansaugen und Ausstoßen des entsprechenden Bestandteils (4, 5) in eine Richtung zum Ausstoßen des Bestandteils, und umgekehrt, umkehrbar ist, wobei zwischen jeder Pumpe (1, 2) und dem Mischer (3) ein Einspritzventil (10, 11) eingefügt ist, wobei das Verfahren folgende Phasen umfasst:
- Öffnen des Einspritzventils (10) der ersten Pumpe (1) und Vornehmen einer Injektion einer vordefinierten Dosis in den Mischer (3) je nach dem vorherbestimmten Dosierverhältnis;
- Schließen des Einspritzventils (10) der ersten Pumpe (1);
- Öffnen des Einspritzventils (11) der zweiten Pumpe (2) und Vornehmen einer Injektion einer vordefinierten Dosis in den Mischer (3) je nach dem vorherbestimmten Dosierverhältnis;
- Schließen des Einspritzventils (11) der zweiten Pumpe (2), um die Phasen des ersten Injektionszyklus zu beenden;
- Auslösen der Umkehrung des Kolbens jeder Pumpe (1, 2) in seine Ansaug- und Ausstoßrichtung, wenn es notwendig ist, die Pumpe mit dem entsprechenden Bestandteil nachzufüllen; und
- erneutes Öffnen des Einspritzventils (10) der ersten Pumpe (1), um den nächsten Zyklus zu beginnen, indem diese Phasen wiederholt werden,
**dadurch gekennzeichnet, dass** das Verfahren ferner folgende Phasen umfasst:
- Bestimmen bei jedem Schließvorgang eines Einspritzventils (10, 11) des Volumens, das in der entsprechenden Pumpe (1, 2) verbleibt, und
- wenn das verbleibende Volumen zum Einspritzen der nächsten Dosis nicht ausreicht, Umkehren der Bewegung des Kolbens der Pumpe (1, 2) in die Ansaug- und Ausstoßrichtung des entsprechenden Bestandteils (4, 5), während das Einspritzventil (10, 11) der anderen Pumpe geöffnet ist, um die Dosis des anderen Bestandteils in den Mischer (3) einzuspritzen.

2. Steuerverfahren nach Anspruch 1, **dadurch gekennzeichnet, dass** das Volumen, das in jeder Pumpe (1, 2) verbleibt, ununterbrochen bestimmt wird, indem die Bewegung des Kolbens der Pumpe erfasst wird.

3. Steuerverfahren nach Anspruch 1, **dadurch gekennzeichnet, dass** der gleiche Druck im Innern der Pumpen (1, 2) aufrechterhalten wird.

4. Steuerverfahren nach einem der vorhergehenden Ansprüche, **dadurch gekennzeichnet, dass** während des Einspritzens der Dosis aus der ersten Pumpe (1) ein mögliches Leck im Kreislauf der zweiten Pumpe (2) erfasst wird, indem eine Bewegung ihres Kolbens beobachtet wird, während ihr Einspritzventil (11) geschlossen ist, und umgekehrt.

5. Steuerverfahren nach Anspruch 4, **dadurch gekennzeichnet, dass** ein Leck in einem Druckventil (8, 9) oder in dem dazugehörigen Einspritzventil (10, 11) erfasst wird, indem eine Bewegung des Kolbens der entsprechenden Pumpe (1, 2) in der Ansaug- und Ausstoßrichtung bestimmt wird, während ihr Einspritzventil geschlossen ist.

6. Steuerverfahren nach Anspruch 4, **dadurch gekennzeichnet, dass** ein Leck in einem Ansaugventil (6, 7) oder in dem dazugehörigen Einspritzventil (10, 11) erfasst wird, indem die Bewegung des Kolbens der entsprechenden Pumpe (1, 2) in der Ausstoßrichtung bestimmt wird, während ihr Einspritzventil geschlossen ist.

7. Dosier- und Mischsystem, gesteuert nach einem der vorherigen Ansprüche, zum Dosieren und Mischen eines Produkts, das einem ersten Bestandteil (4) und einem zweiten Bestandteil (5) besteht, die in einem Mischer (3) in einem vorherbestimmten Dosierverhältnis zu mischen sind, wobei das System eine erste Kolbenpumpe (1), die zum Einspritzen einer Dosis des ersten Bestandteils (4) in den Mischer (3) geeignet ist, und eine zweite Kolbenpumpe (2), die zum Einspritzen einer Dosis des zweiten Bestandteils (5) in den Mischer (3), und zwar sequenziell im Verhältnis zur ersten Pumpe (1), geeignet ist, umfasst, wobei die Bewegung des Kolbens jeder Pumpe (1, 2) von einer Richtung zum Ansaugen und Ausstoßen des Volumens der Pumpe in eine Richtung zum Ausstoßen des entsprechenden Bestandteils (4, 5), und umgekehrt, umkehrbar ist, wobei ein Einspritzventil (10, 11) zwischen jeder Pumpe (1, 2) und dem Mischer (3) eingefügt ist, **dadurch gekennzeichnet, dass** es ferner ein Steuergerät (20) umfasst, das programmiert ist, um die Bewegung des Kolbens einer Pumpe (1, 2) in der Ansaug- und Ausstoßrichtung des Volumens dieser Pumpe auszulösen, nachdem infolge des Schließens des Einspritzventils (10, 11) festgestellt wurde, dass das in der Pumpe (1, 2) verbleibende Volumen nicht ausreicht, um die nächste Dosis des entsprechenden Bestandteils (4, 5) in den Mischer (3) einzuspritzen.

8. Dosier- und Mischsystem nach Anspruch 7, **dadurch gekennzeichnet, dass** das Steuergerät (20) mit einem Bewegungsdetektor (21) verbunden ist, der mit jeder Pumpe (1, 2) verknüpft ist, um ununterbrochen die Bewegung des Kolbens der Pumpe zu erfassen.

9. Dosier- und Mischsystem nach Anspruch 8, **dadurch gekennzeichnet, dass** der Bewegungsdetektor (21) ein linearer Detektor ist.

10. Dosier- und Mischsystem nach einem der Ansprüche 7 bis 9, **dadurch gekennzeichnet, dass** der erste Bestandteil (4) eine Base und der zweite Bestandteil (5) ein Katalysator ist.
